(19) **Europäisches Patentamt**
**European Patent Office**
**Office européen des brevets**

(11) **EP 2 038 968 B1**

(12) **FASCICULE DE BREVET EUROPEEN**

(45) Date de publication et mention
de la délivrance du brevet:
**22.09.2010 Bulletin 2010/38**

(21) Numéro de dépôt: **07787393.3**

(22) Date de dépôt: **11.07.2007**

(51) Int Cl.:
*H01S 3/00* $^{(2006.01)}$     *H01S 3/23* $^{(2006.01)}$

(86) Numéro de dépôt international:
**PCT/EP2007/057122**

(87) Numéro de publication internationale:
**WO 2008/006859 (17.01.2008 Gazette 2008/03)**

(54) **PROCEDE D'AMPLIFICATION A DERIVE DE FREQUENCE SPATIO-TEMPORELLE ET DISPOSITIF DE MISE EN OEUVRE**

VERFAHREN ZUR VERSTÄRKUNG DURCH RÄUMLICH-ZEITLICHE FREQUENZUMSETZUNG UND EINRICHTUNG ZUM AUSFÜHREN DES VERFAHRENS

METHOD FOR AMPLIFICATION BY SPATIO-TEMPORAL FREQUENCY CONVERSION AND DEVICE FOR CARRYING OUT SAID METHOD

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **11.07.2006 FR 0606303**

(43) Date de publication de la demande:
**25.03.2009 Bulletin 2009/13**

(73) Titulaire: **THALES**
**92200 Neuilly sur Seine (FR)**

(72) Inventeurs:
- **FALCOZ, Franck**
  **F-91410 Dourdan (FR)**
- **CHERIAUX, Gilles**
  **F-94260 Fresnes (FR)**

(74) Mandataire: **Chaverneff, Vladimir**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A1- 2004 000 942**

- **OHMAE G ET AL: "SPATIAL SPECTRUM CHIRP CHARACTERISTIC OF A MARTINEZ-TYPE MULTIPASS PULSE STRETCHER" JAPANESE JOURNAL OF APPLIED PHYSICS, JAPAN SOCIETY OF APPLIED PHYSICS, TOKYO, JP, vol. 39, no. 10, PART 1, octobre 2000 (2000-10), pages 5864-5869, XP001020629 ISSN: 0021-4922**
- **HOFFSTAEDT A: "Design and performance of a high-average-power flashlamp-pumped Ti: sapphire laser and amplifier" IEEE JOURNAL OF QUANTUM ELECTRONICS, IEEE SERVICE CENTER, PISCATAWAY, NJ, US, vol. 33, no. 10, octobre 1997 (1997-10), pages 1850-1863, XP011051743 ISSN: 0018-9197**
- **ZHIYI WEI ET AL: "Optimized Design and Construction of 100TW Ti: sapphire Laser --- Toward to phase controlling, Spectrum shaping and wave-front correction" LEOS, 2005 IEEE ANNUAL MEETING CONFERENCE PROCEEDINGS SYDNEY, AUSTRALIA 23-27 OCT. 2005, PISCATAWAY, NJ, USA,IEEE, 23 octobre 2005 (2005-10-23), pages 619-620, XP010886708 ISBN: 0-7803-9217-5**

EP 2 038 968 B1

**Description**

La présente invention se rapporte à un procédé d'amplification à dérive de fréquence spatio-temporelle pour un laser impulsionnel comprenant une chaîne amplificatrice à dérive de fréquence, dite CPA (Chirped Pulse Amplification).

La réalisation de lasers impulsionnels, de type saphir dopé au titane, à très forte puissance crête, nécessite de contrôler des spectres très larges pour diminuer les durées des impulsions à la sortie de la chaîne amplificatrice.

Afin d'extraire la plus grande partie de l'énergie stockée dans les milieux amplificateurs, ces derniers sont souvent utilisés à un régime proche de la saturation. Cette saturation provoque malheureusement dans les chaînes à dérive de fréquence un décalage spectral qui limite la bande totale.

Une solution classique pour éviter le rétrécissement spectral est d'utiliser une pré-compensation, en début de chaîne (avant l'amplificateur régénératif ou multi-passage). Cette solution à base de filtrage a l'inconvénient de limiter le rendement d'extraction des amplificateurs et est d'autant moins efficace que le nombre de passages dans les amplificateurs est important.

Dans le détail, les chaînes CPA mettent en oeuvre la technologie à dérive de fréquence qui est basée sur l'utilisation d'impulsions à spectre large, l'étirement d'impulsions, l'amplification et la re-compression de ces impulsions étirées. Typiquement, dans les chaînes CPA à base d'oscillateurs comportant des cristaux Ti :Sa qui ont un spectre d'une largeur de 5 à 100nm, pour des durées d'impulsions comprimées de 150 à 10fs.

La capacité d'une chaîne d'amplification à maintenir un spectre correct influe directement sur la capacité du laser à travailler en impulsions courtes. Le rétrécissement spectral induit par les amplificateurs est donc un facteur clé d'obtention des performances de durée courte. De même, une forte déformation du spectre, par exemple asymétrique, perturbe la forme temporelle et dégrade le fonctionnement du laser.

Les amplificateurs utilisés sont de type n passages du faisceau dans le milieu amplificateur. Lorsque n est faible (inférieur à 10) la configuration multi-passage géométrique est généralement utilisée. Le laser de pompe envoie une impulsion dans le cristal et le faisceau à amplifier est ensuite envoyé et effectue n passages pour optimiser l'extraction en énergie.

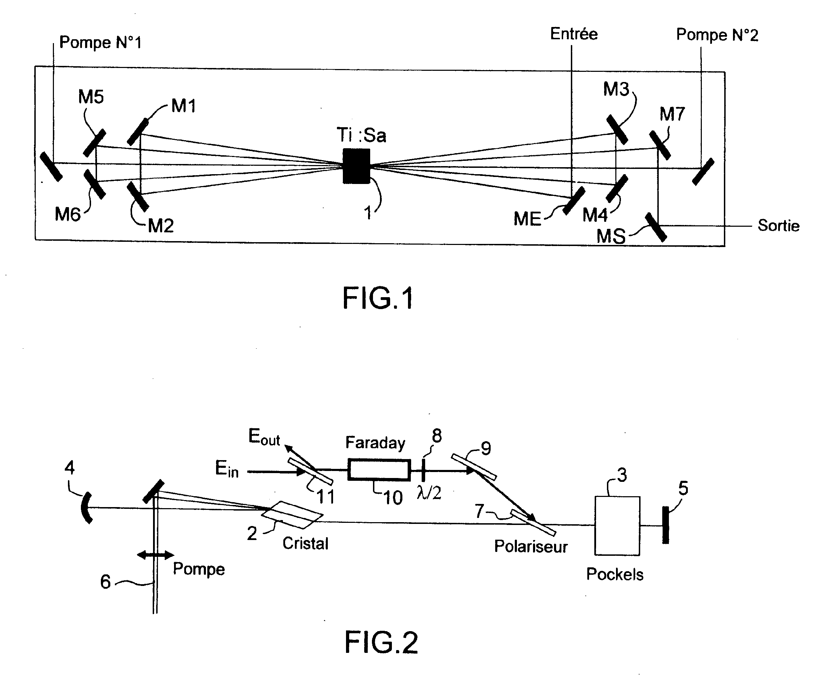

On a schématisé en figure 1 un tel amplificateur multi-passages, qui comporte essentiellement un cristal 1 (par exemple Ti :Sa) recevant depuis un miroir d'entrée ME des impulsions d'entrée sous un angle différent de la normale à sa surface d'incidence, et plusieurs miroirs de renvoi M1 à M7 disposés de part et d'autre du cristal 1 de façon à faire traverser le cristal par le faisceau sous différents angles d'incidence, le dernier miroir M7 renvoyant ce faisceau vers la sortie via un miroir de sortie MS.

Lorsque l'on cherche un facteur d'amplification important, il faut augmenter le nombre de passages et la configuration de la figure 1 n'est plus applicable. La configuration généralement utilisée est alors l'amplificateur régénératif, dont un exemple de réalisation est schématisé en figure 2. Ce type d'amplificateur permet de réaliser aisément une trentaine de passages. Un amplificateur de ce type est connu par exemple d'après le document US 2004/0 000 942 A.

Le système représenté en figure 2 comporte un cristal 2 disposé, avec une cellule de Pockels 3, dans une cavité optique fermée par deux miroirs 4, 5 et pompé par une pompe 6. Un polariseur 7, disposé dans la cavité, permet de prélever une partie du faisceau intra-cavité, le faisceau prélevé passant par une lame demi-onde 8, un miroir de renvoi 9 et un rotateur de Faraday 10 à la sortie duquel un miroir semi-transparent 11 le renvoie vers l'utilisation (faisceau $E_{out}$). D'autre part, le polariseur 7 permet d'injecter dans cette cavité un faisceau extérieur $E_{in}$.

Dans tous les deux cas (Figs. 1 et 2), le gain de l'amplificateur s'écrit :

$$E_{OUT} = J_{SAT}.S.\ln\left(\frac{J_{STO}}{J_{SAT}}\left(e^{\frac{E_{in}}{SJ_{SAT}}} - 1\right) + 1\right)$$

$J_{STO}$ étant la fluence stockée disponible pour le gain dans le milieu (le cristal) et $J_{SAT}$ la fluence de saturation de ce milieu. C'est l'équation classique de la théorie de Frantz et Nodvick.

Dans le tableau ci-dessous, on a fait figurer quelques exemples de valeurs de $J_{SAT}$ pour différents matériaux lasers :

| Matériaux | $J_{sat}$ en J/cm$^2$ | Gamme spectrale |
|---|---|---|
| Colorants | ~0.001 J/cm$^2$ | Visible |
| Excimers | ~0.001 J/cm$^2$ | UV |
| Nd:YAG | 0.5J/cm$^2$ | 1064 nm |
| Ti:Al$_2$0$_3$ | 1.1 J/cm$^2$ | 800 nm |
| Nd:Glass | 5J/cm$^2$ | 1054 nm |
| Alexandrite | 22 J/cm$^2$ | 750 nm |
| Cr:LiSAF | 5 J/cm$^2$ | 830 nm |

En régime de petit signal, avec $J_{IN} \ll J_{SAT}$, on peut approximer la relation de gain avec :

$$G = \frac{E_{OUT}}{E_{IN}} = e^{\left(\frac{J_{STO}}{J_{SAT}}\right)}$$

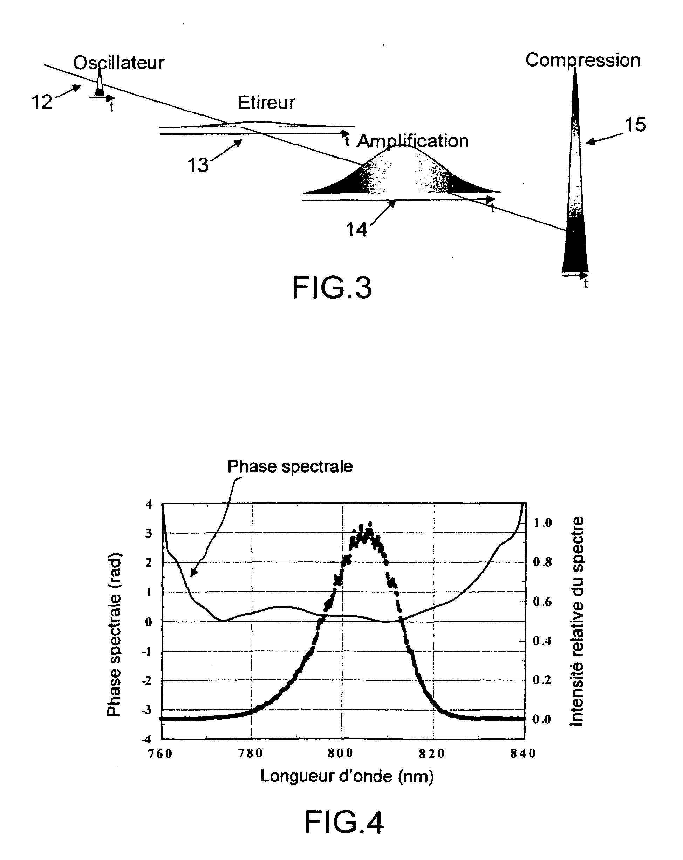

L'impulsion amplifiée étant étirée (dispersée), le plus souvent positivement, un problème a été mis en évidence par le Demandeur. En effet, les chaînes à impulsions courtes utilisent un oscillateur à large spectre et ces impulsions courtes sont étirées temporellement pour être ensuite amplifiées et re-comprimées en sortie. On a schématiquement représenté une telle chaîne en figure 3, cette chaîne comportant essentiellement un oscillateur 12, un étireur 13, un ou plusieurs étages d'amplification 14 et un dispositif de compression 15. On a représenté un exemple de spectre d'un signal d'oscillateur Ti :Sa en figure 4, où la phase spectrale est représentée en trait continu.

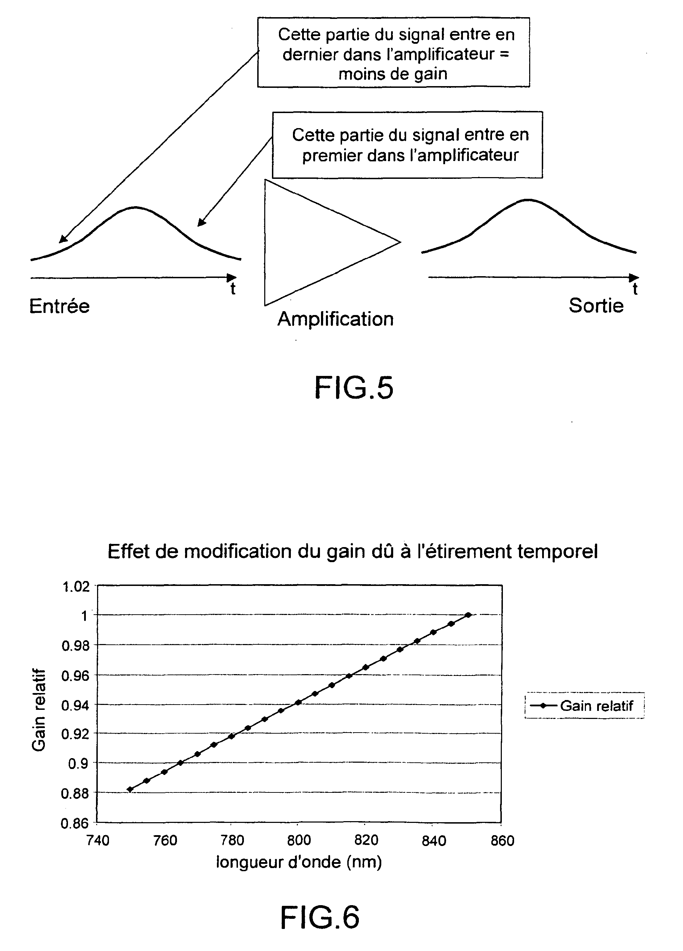

Lorsque l'impulsion pénètre dans l'amplificateur, les composantes spectrales initiales voient un gain g1 et sont amplifiées. Les composantes suivantes étant dans l'amplificateur voient donc un gain g2 qui a diminué car le début de l'impulsion a « consommé » de l'énergie stockée. La forme temporelle du gain a une forme du type de celle représentée en figure 5.

On a un gain initial pour la première partie temporelle de la forme :

$$gi = \frac{j_{STO}}{J_{SAT}}$$

et un gain final, qui tient compte de l'énergie extraite, de la forme :

$$gf = \frac{j_{STI} - J_{ex}}{j_{SAT}}$$

$J_{ex}$ étant la fluence extraite de l'amplificateur.

Le gain apparent est donc plus élevé pour le début temporel du signal que pour la fin, ce qui induit une déformation spectrale du signal amplifié, comme représenté en figure 6. La courbe de la figure 6 montre l'effet de modification du gain d'un cristal laser dû à l'étirement temporel des impulsions à amplifier. Cette courbe donne la valeur du gain pondéré (gain relatif, comme pour toutes les autres courbes de gain) en fonction de la longueur d'onde du signal amplifié.

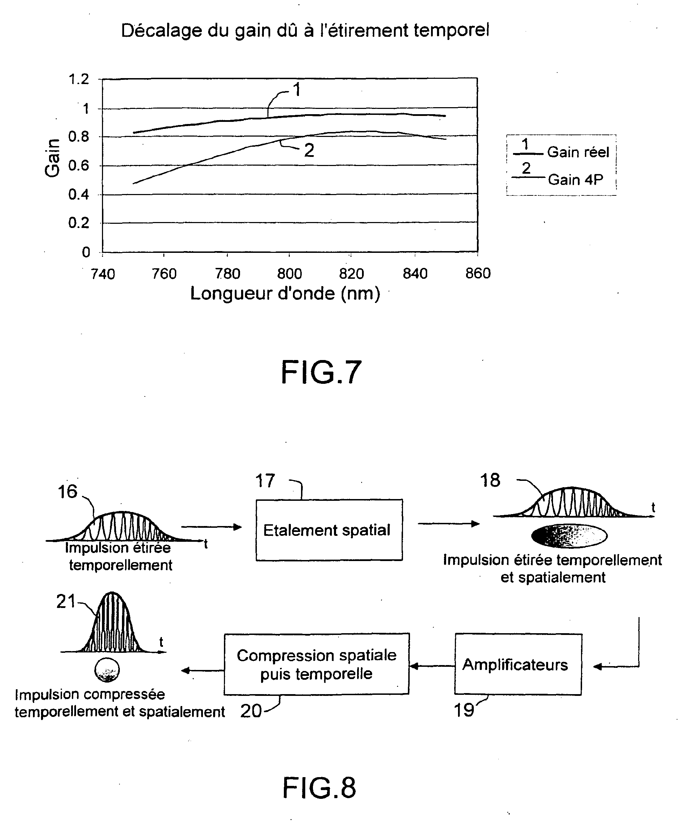

La figure 7 montre deux courbes du décalage du gain dû à l'étirement temporel en fonction de la longueur d'onde, respectivement pour un passage et pour quatre passages à travers le cristal.

En plus du décalage du spectre, on observe également un rétrécissement dû à la largeur de la bande de gain.

La combinaison de ces deux effets vient donc limiter fortement les performances des chaînes à dérive de fréquence, car elle limite la re-compression des impulsions incidentes en vue d'obtenir à la sortie des impulsions de durées très courtes, par exemple d'une durée de quelques fs.

Pour compenser ces effets, on peut procéder à une pré-distorsion du signal d'entrée par filtrage actif ou passif au prix d'une diminution du rendement du laser (baisse du gain). De plus, les filtres utilisés ont des rendements faibles (<50%) car ils agissent (coupent) spectralement au maximum d'énergie.

Une deuxième solution consisterait à faire travailler les amplificateurs loin de la saturation, mais dans ce cas on diminue fortement l'énergie que l'on peut extraire de l'amplificateur. De plus, la stabilité de l'impulsion en sortie dépend alors fortement de la stabilité de l'impulsion d'entrée.

La présente invention a pour objet un procédé défini dans la revendication 1 permettant d'optimiser le fonctionnement des amplificateurs optiques, en particulier ceux des chaînes laser CPA, pratiquement sans perte d'énergie et sans altération du spectre des impulsions produites. La présente invention a également pour objet un dispositif defini dans la revendication 3 de mise en oeuvre de ce procédé.

Le procédé conforme à l'invention s'applique à un amplificateur optique de chaîne laser à dérive de fréquence (CPA), et il est caractérisé en ce qu'il consiste à étaler spatialement les différentes composantes spectrales et à amplifier séparément ces différentes composantes.

La présente invention sera mieux comprise à la lecture de la description détaillée d'un mode de réalisation, pris à titre d'exemple non limitatif et illustré par le dessin annexé, sur lequel :

- la figure 1, déjà décrite ci-dessus, est un schéma simplifié d'un étage amplificateur multi-passage d'une chaîne CPA ;
- la figure 2, déjà décrite ci-dessus, est un schéma d'un amplificateur régénératif de l'art antérieur ;
- la figure 3, déjà mentionnée ci-dessus, est un schéma simplifié d'une chaîne CPA classique ;
- la figure 4, déjà mentionnée ci-dessus, est un diagramme d'un exemple de courbe d'évolution du spectre d'un oscillateur Ti :Sa et de sa phase spectral ;
- la figure 5, déjà mentionnée ci-dessus, est un schéma simplifié indiquant les parties d'un signal impulsionnel sur lesquelles agit un amplificateur d'une chaîne CPA ;
- les figures 6 et 7, déjà mentionnées ci-dessus, sont différentes courbes de gain mettant en évidence des problèmes rencontrés dans les chaînes CPA classiques ;
- la figure 8 est un schéma d'une chaîne CPA conforme à l'invention et montrant comment est appliqué le procédé de l'invention ;

- la figure 9 est un schéma simplifié d'un dispositif d'étalement spatial des composantes spectrales d'une impulsion lumineuse, dispositif utilisé par l'invention ; et
- la figure 10 est un schéma montrant un exemple de zones de pompage d'un cristal laser utilisé conformément à l'invention.

L'invention consiste à utiliser un dispositif permettant d'étaler spatialement le faisceau a amplifier. Cette invention fonctionne dans tout type d'amplificateur (régénératif ou multi-passage) et permet de compenser le décalage spectral tout en tirant bénéfice du fonctionnement à saturation des amplificateurs.

Dans le détail, l'invention utilise un système optique qui permet d'étaler spatialement les différentes composantes spectrales de l'impulsion que l'on souhaite amplifier afin d'éviter que ces composantes partagent la même zone spatiale de gain lors de l'amplification. La conséquence immédiate est que l'effet de saturation va être distribué sur toute la bande spectrale de l'impulsion au lieu de n'intervenir que sur le front infrarouge. Le contrôle de l'étalement spatial des différentes composantes spectrales de l'impulsion permet de répartir le gain en fonction de la forme de la zone pompée et de l'étirement temporel.

Pour une configuration donnée, on va donc pouvoir obtenir un gain uniforme sur toute la bande spectrale et s'affranchir des effets de décalage dus à la saturation. Une fois les composantes amplifiées à la valeur désirée, il suffit de les faire passer dans un système optique de compression spatiale permettant de superposer les composantes spectrales.

On a représenté de façon simplifiée le dispositif de l'invention en figure 8. On prend l'exemple d'une impulsion incidente 16. Elle est déjà étirée temporellement de façon classique, et passe d'abord dans un dispositif d'étirement spatial 17, à la sortie duquel on obtient une impulsion 18 étirée à la fois temporellement et spatialement. Cette impulsion 18 est amplifiée par un dispositif d'amplification 19 comportant un ou plusieurs étages amplificateurs optiques. Elle est ensuite comprimée spatialement puis temporellement par un dispositif 20, à la sortie duquel on obtient une impulsion 21 amplifiée et compressée spatialement et temporellement.

Deux conditions doivent être réunies pour que le dispositif de l'invention fonctionne correctement. La première est que l'impulsion doit être collimatée spatialement (les composantes spectrales doivent être parallèles) afin d'éviter un mélange des zones de gain au fur et à mesure de la propagation de l'impulsion dans les amplificateurs. La seconde est que le système optique d'étalement spatial utilisé en entrée (en 7) doit présenter une loi sensiblement inverse (tenant compte des éventuels effets d'aberration spectrale dans le domaine spatial, effets dus à l'amplification) de celle du système optique utilisé en sortie (en 10) en tant que compresseur, comme cela est le cas pour un étireur et un compresseur dans un système CPA classique.

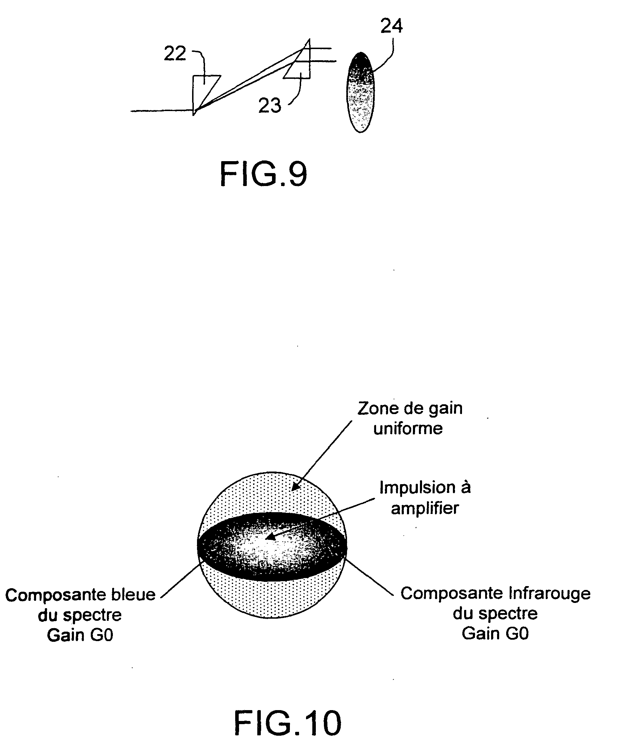

On a représenté en figure 9 un exemple de réalisation du dispositif d'étalement spatial 17. Cet exemple est une ligne de prismes, comportant dans le présent exemple deux prismes 22, 23 placés sur le parcours de l'impulsion que l'on souhaite amplifier, mais il est bien entendu que cette ligne peut comporter plus de deux prismes. A la sortie de cet ensemble de prismes, l'impulsion est étalée spectralement et sa section 24 présente, dans l'exemple représenté, une géométrie spatiale elliptique. Cette impulsion étalée est ensuite envoyée dans un cristal amplificateur dont la zone de pompage (donc de gain) est circulaire (il est également avantageux d'adapter la forme de la zone de gain à la forme de l'impulsion que l'on souhaite amplifier). Si le pompage est uniforme, on peut considérer que le gain total G0 est uniformément réparti sur la surface pompée, comme représenté en figure 10.

Comme l'impulsion est étirée temporellement, la première composante spectrale entrant dans le cristal est la longueur d'onde la plus faible et va se situer par exemple dans la partie droite de la zone de gain (telle que vue sur la figure 10). La dernière composante spectrale à entrer dans le cristal amplificateur sera la partie bleue qui verra la partie gauche de la zone de gain. Au fur et à mesure de la progression des différentes composantes dans le cristal , chaque composante spectrale va donc disposer de sa propre zone de gain et la saturation va se présenter de manière équivalente pour toutes les composantes spectrales. Le spectre de l'impulsion injectée dans l'amplificateur va donc être conservé.

Il suffit ensuite de renvoyer l'impulsion disponible à la sortie des amplificateurs vers un dispositif de compression spatiale à prismes pour superposer spatialement les différentes composantes spectrales.

Les avantages présentés par le dispositif de l'invention sont les suivants. Il permet de supprimer le filtrage spectral généralement utilisé à l'entrée des chaînes amplificatrices pour limiter les effets dus à la saturation. Il est applicable à tout type d'amplificateur fonctionnant en régime proche de la saturation, en particulier les amplificateurs régénératifs et multi-passage. Il est applicable à des étages amplificateurs comportant toutes sortes de matériaux laser, par exemple le saphir dopé au titane.

Le contrôle de l'étalement spatial du spectre permet non seulement de compenser les effets liés à la saturation, mais également de mettre en forme le spectre en favorisant par exemple certaines composantes spectrales. Ce contrôle peut être fait soit par le dispositif d'étalement soit par l'ajout d'un composant optique telle une matrice à cristaux liquides.

La forme de la zone de gain peut être adaptée à la forme spatiale de l'impulsion à amplifier pour maximiser l'extraction.

Tout type de dispositif optique connu permettant d'étaler spatialement le spectre peut être utilisé. Il peut être avantageux d'utiliser le même dispositif en entrée et en sortie d'amplificateur pour compenser le « chirp » spatial.

En conclusion, une caractéristique essentielle de l'invention est l'introduction d'un « chirp » spatial sur l'impulsion que l'on souhaite amplifier. L'invention permet de faire fonctionner les systèmes amplificateurs en régime de saturation sans subir les effets de déformation du spectre. Elle permet d'atteindre des durées d'impulsions plus courtes en maintenant un spectre large durant les phases d'amplification, et ceci en maximisant le rendement du laser. C'est donc un nouveau procédé d'amplification d'impulsions courtes basé sur l'étirement spatial combiné à l'étirement temporel.

## Revendications

1. Procédé d'amplification à dérive de fréquence spatio-temporelle pour un laser impulsionnel, comprenant une chaîne amplificatrice à dérive de fréquence, **caractérisé en ce qu'**il consiste dans l'ordre : à étirer temporellement les impulsions, à étaler spatialement les différentes composantes spectrales desdites impulsions, à amplifier séparément ces différentes composantes, puis à comprimer spatialement et temporellement les impulsions amplifiées.

2. Procédé selon la revendication 1, **caractérisé en ce que** les différentes composantes spectrales sont collimatées spatialement lors de leur étalement spatial.

3. Dispositif d'amplification à dérive de fréquence spatio-temporelle pour un laser impulsionnel, comprenant une chaîne amplificatrice à dérive de fréquence, **caractérisé en ce qu'**il comporte, dans l'ordre chronologique de passage de chaque impulsion : un dispositif d'étirement temporel d'impulsions (16), un dispositif d'étalement spatial des impulsions (17), des étages d'amplification (19) et un dispositif (20) de compression spatiale et temporelle des impulsions amplifiées.

4. Dispositif selon la revendication 3, **caractérisé en ce que** le dispositif d'étalement spatial et le dispositif de compression spatiale des impulsions comportent chacun au moins deux prismes (12,13).

5. Dispositif selon la revendication 3 ou 4, **caractérisé en ce que** la loi de compression du dispositif d'étalement spatial est inverse de la loi d'étalement du système optique de compression spatiale.

6. Dispositif selon la revendication 5, **caractérisé en ce que** la loi de compression du dispositif de compression spatiale tient compte des effets d'aberration spectrale dans le domaine spatial dus à l'amplification.

7. Dispositif selon l'une des revendications 4 à 6, **caractérisé en ce que** la chaîne amplificatrice comporte dans au moins un étage amplificateur un cristal laser Ti :Sa.

8. Laser impulsionnel, **caractérisé en ce qu'**il comporte un dispositif d'amplification à dérive de fréquence spatio-temporelle selon l'une des revendications 3 à 7.

## Claims

1. A process for amplification by spatial and temporal frequency conversion for a pulse laser, including a frequency conversion amplification chain, **characterised in that** it consists in the following sequence: temporally extending the pulses, spatially spreading the different spectral components of said pulses, separately amplifying these different components, and subsequently spatially and temporally compressing the amplified pulses.

2. The process according to claim 1, **characterised in that** the different spectral components are spatially collimated whilst being spatially spread.

3. A device for amplification by spatial and temporal frequency conversion for a pulse laser, including a frequency conversion amplification chain, **characterised in that** it includes, in chronological order of the passage of each pulse: a device for temporal extension of the pulses (16), a device for spatial spreading of the pulses (17), amplification steps (19) and a device (20) for spatial and temporal compression of the amplified pulses.

4. The device according to claim 3, **characterised in that** the device for spatial spreading and the device for spatial compression of the pulses each comprise at least two prisms (12, 13).

5. The device according to claim 3 or 4, **characterised in that** the compression rule of the device for spatial spreading is inverse to the spreading rule for the optical system for spatial compression.

6. The device according to claim 5, **characterised in that** the compression rule for the device for spatial compression takes into account the effects of spectral aberration in the spatial field, which are due to amplification.

7. The device according to any one of claims 4 to 6, **characterised in that** the amplifying chain includes a Ti:Sa laser crystal in at least one amplification step.

**8.** A pulse laser, **characterised in that** it includes a device for amplification by spatial and temporal frequency conversion according to any one of claims 3 to 7.

**Patentansprüche**

**1.** Verfahren zur Verstärkung durch räumlich-zeitliche Frequenzumsetzung für einen Impulslaser, der eine Frequenzumsetzungsverstärkungskette beinhaltet, **dadurch gekennzeichnet, dass** es aus der folgenden Reihenfolge besteht: zeitliches Hinausziehen der Impulse, räumliches Spreizen der verschiedenen Spektralkomponenten der Impulse, separates Verstärken dieser verschiedenen Komponenten, dann räumliches und zeitliches Komprimieren der verstärkten Impulse.

**2.** Verfahren nach Anspruch 1, **dadurch gekennzeichnet, dass** die verschiedenen Spektralkomponenten bei ihrer räumlichen Spreizung räumlich kollimiert werden.

**3.** Vorrichtung zur Verstärkung durch räumlich-zeitliche Frequenzumsetzung für einen Impulslaser, der eine Frequenzumsetzungsverstärkungskette beinhaltet, **dadurch gekennzeichnet, dass** sie in chronologischer Reihenfolge der Passage der einzelnen Impulse Folgendes umfasst: eine Vorrichtung zum zeitlichen Hinausziehen der Impulse (16), eine Vorrichtung zum räumlichen Spreizen der Impulse (17), Verstärkungsstufen (19) und eine Vorrichtung (20) zum räumlichen und zeitlichen Komprimieren der verstärkten Impulse.

**4.** Vorrichtung nach Anspruch 3, **dadurch gekennzeichnet, dass** die Vorrichtung zum räumlichen Spreizen und die Vorrichtung zum räumlichen Komprimieren der Impulse jeweils wenigstens zwei Prismen (12, 13) umfassen.

**5.** Vorrichtung nach Anspruch 3 oder 4, **dadurch gekennzeichnet, dass** die Kompressionsregel der Vorrichtung zum räumlichen Spreizen umgekehrt zur Spreizregel des optischen Systems zur räumlichen Kompression ist.

**6.** Vorrichtung nach Anspruch 5, **dadurch gekennzeichnet, dass** die Kompressionsregel der Vorrichtung zur räumlichen Kompression die Auswirkungen von verstärkungsbedingter Spektralabweichung in der Raumdomäne berücksichtigt.

**7.** Vorrichtung nach einem der Ansprüche 4 bis 6, **dadurch gekennzeichnet, dass** die Verstärkungskette in wenigstens einer Verstärkungsstufe ein Ti:Sa Laserkristall umfasst.

**8.** Impulslaser, **dadurch gekennzeichnet, dass** er eine Vorrichtung zum Verstärken durch räumlich-zeitliche Frequenzumsetzung nach einem der Ansprüche 3 bis 7 umfasst.

FIG.1

FIG.2

7

**FIG.3**

**FIG.4**

8

Cette partie du signal entre en dernier dans l'amplificateur = moins de gain

Cette partie du signal entre en premier dans l'amplificateur

Entrée

Amplification

Sortie

## FIG.5

Effet de modification du gain dû à l'étirement temporel

longueur d'onde (nm)

## FIG.6

## Décalage du gain dû à l'étirement temporel

FIG.7

FIG.8

**FIG.9**

Zone de gain
uniforme

Impulsion à
amplifier

Composante bleue
du spectre
Gain G0

Composante Infrarouge
du spectre
Gain G0

**FIG.10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040000942 A